# EUROPEAN PATENT APPLICATION

(11) **EP 4 757 159 A1**
(43) Date of publication of application: **10.06.2026**
(21) Application number: 24218445.5
(22) Date of filing: 09.12.2024
(51) Int. Cl.: H02M 7/17, H02M 7/155, H02M 5/12, H02M 1/12, H02M 1/14, C25B 1/04, C25B 15/02

(54) **METHOD OF OPERATING A POWER SUPPLY FOR A MULTI-STACK ELECTROLYZER SYSTEM, RELATED POWER SUPPLY AND ELECTROLYZER SYSTEM**

(71) Applicant: Siemens Energy Global GmbH & Co. KG, 81739 München (DE)
(72) Inventor: Lukianov, Semen, 91058 Erlangen (DE); Loku, Fisnik, 90439 Nürnberg (DE); Bendig, Marvin, 90513 Zirndorf (DE)

(57) **Abstract**

A method of operating a power supply system (1) for a multi-stack electrolyzer system (2) is presented, the power supply (1) comprising a transformer unit (3) operable to transform an alternating current electrical power (AC) and a rectifier system (4) operable to convert the alternating current electrical power (AC) to a direct current electrical power (DC), wherein at least two thyristor-type rectifier units (5) are connected in parallel between the transformer unit (3) on the AC side and an electrolysis array (110) on the DC side of the rectifier (4), and wherein the two rectifier units (5) are connected to different electrolyser stacks (6a, 6b), wherein the method comprises controlling the voltage of the rectifier units (5), wherein a reference DC voltage is provided to a control unit (7), wherein the control unit (7) controls the DC voltage (V_{dc}) to a common reference value (V_{dc ref}) by providing a corresponding firing angle (α_{ref}). Moreover, a related controller, power supply and the multi-stack electrolyzer system, are provided.

## Description

The present invention relates to a method of operating a power supply for a multi-stack electrolyzer system or electrolyzer plant. The presented method may as well relate to a method of operating said electrolyzer system. Moreover, a related control unit for the power supply, the power supply system itself and a corresponding multi-stack electrolyzer system (plant) are subject to the present invention.

The electrolyzer system preferably comprises a plurality of electrolyzer stacks set up for so-called PEM electrolysis ("Proton Exchange Membrane"). In these techniques, water is split in a catalyst layer, generating hydrogen on the cathode side of each cell. "PEM" also standing for "Polymer Electrolyte Membrane") is gaining ever more importance in the industrial production of green hydrogen from renewable energy, among other things, due to its load-dynamic behaviour and suitability to cope with fluctuating power levels, especially compared to alkaline electrolysis, with slightly less complex peripherals. Favourably, high current densities and outputs can be achieved with PEM electrolysis even at higher load gradients and high purity of the hydrogen product.

In PEM electrolysis as well as in alkaline electrolysis for instance to which the presented concept may as well be applicable, hydrogen (H₂) is produced electrolytically from water as a feedstock. This is an electrochemical process in which water is separated into its chemical components, oxygen (O₂) at the anode and hydrogen at the cathode.

Industry-scale hydrogen producing water electrolysis systems have a high DC current demand of, e.g., 7 to 10 kA. Here, thyristor-based rectifiers pose a viable means to cope with these high currents. Thyristor rectifiers are known for their favourable current carrying capacity, their efficiency and reliability.

To minimize the harmonics which are generated though, a so-called 24-pulse system is often implemented for a multi-array electrolyzer system. Here, the rectifiers are connected in parallel and each of the rectifiers is connected to a row of electrolyzer modules or stacks. Two neighbouring rectifiers connected in parallel cancel their emitted lower harmonics out, thereby building a 12-pulse system. In turn, two 12-pulse systems cancel their emitting harmonics and therefore build a 24-pulse system.

For these systems special transformer devices with defined phase-shifts between the secondary-side voltages are, however, required. Assuming that the transformer losses, the secondary-side voltages of the transformer (e.g., the delta and the wye winding), and the additional transformer branch phase-shift (±7.5°) are perfectly balanced between themselves, all the harmonics below the 23rd harmonic should be completely compensated in such a 24-pulse system and the first harmonics that would result would be the 23rd harmonic.

However, in real systems, deviations of the transformer losses, the secondary-side voltages, phase-shifts, and V-I characteristics of the stacks exist. These deviations or tolerances, especially in the secondary-side voltage levels of the transformer and V-I characteristics of the stacks or module rows still lead to non-perfect cancellation of uncharacteristic harmonics for the 24-pulse system.

Furthermore, considering that state-of-the art thyristor-based rectifiers mostly control the output current of rectifiers, these deviations lead to differences in reference firing angles between rectifiers, which, in turn, also leads to not perfect cancellation of harmonics. The overall situation becomes even more critical if it is taken into account that allowable tolerances on the AC side are defined according to corresponding standards, such as the DIN EN / IEC 60076 or IEC 61378 Standard. However, the deviations are not necessarily limited by these standards, as the standards can be applied to different electrical equipment and networks, for instance.

Moreover, the deviations between V-I characteristics of electrolyzer module rows on the DC side have a significant impact on the resulting harmonics. However, these are not defined in the standards and can change during the lifetime of the electrolyzer due to the different aging of the module rows or replacement of separate stacks.

The said "firing angle" is characterized or defined as the phase angle measured from the instant, the thyristor rectifier gets forward biased by a related voltage to the instant when it is triggered or fired by a gate signal (current).

It is, hence, an object of the present invention to provide means which overcome the mentioned drawbacks and particularly improve emission of harmonics and prevent harmonic disturbances in this context to the benefit of an improved hydrogen production rate and reduced aging of the stacks in the system.

The mentioned object is achieved by the subject-matters of the independent claims. Advantageous embodiments are subject-matters of the dependent claims.

An aspect of the present invention relates to a method of operating a power supply a power supply system for an electrolyzer plant. The electrolyzer plant is preferably an industrial scale multi-stack system suitable for an uptake of renewable power on the multidigit megawatt (MW) scale.

The power supply system comprises a transformer unit operable to transform an alternating current electrical power expediently from high or medium voltage input to a medium or low voltage output, respectively. The transformer unit may be a three-winding transformer in the delta-wye or delta-star winding configuration. Further, the term transformer "unit" shall not exclude that said unit may be subdivided into further elements or that a plurality of three winding sets for the electrical power transformation is implemented.

The power supply further comprises a rectifier system operable to convert the alternating current electrical power to a direct current electrical power, wherein at least two thyristor-type rectifier units are connected in parallel between the transformer unit on the AC side and an electrolysis array on the DC side of the rectifier.

An electrolysis "array" shall synonymously indicate a row of electrolyzer stacks, comprising at least one stack, preferably two or more stacks, like a plurality of six stacks for example. The stacks of the array are expediently connected in series, wherein the whole plant or electrolysis system comprises in turn preferably a plurality of arrays or rows (connected in parallel).

The mentioned rectifier units are connected to different electrolyzer stacks or stack rows of the array. In other words, each unit is connected to at least one electrolyzer stack or a stack series, differing for different rectifier units. The first rectifier unit is preferably connected to a first stack or row of stacks, while the second rectifier unit is preferably connected to a second stack or row of stacks, being separate from the first stack(s).

The presented method comprises controlling the voltage of the rectifier units, preferably each of the rectifier units, wherein a reference DC voltage is provided to a control unit of the underlying power supply system, for instance.

Additionally or alternatively, said control unit may form part of an electrolyzer controller and/or a rectifier controller.

The controls of the method may as well be implemented in a control program or the rectifier and/or the electrolyzer controllers may be programmed by the proposed voltage control functionality.

According to the invention, the control unit controls the mentioned DC voltage to a common reference value by providing a corresponding "gate" firing angle in order to control the DC voltage. The main advantage of the proposed method is the elimination of (AC current) harmonics, which appear as a consequence of deviations between V-I characteristics of different electrolyzer stacks and/or electrolyzer module rows on the DC side.

The electrolyzer system comprising the plurality of electrolyzer stacks is preferably set up for generating hydrogen by an electrolysis of water via PEM electrolysis, conditionally also via alkaline electrolysis or so-called AEM, i.e. "Anion Exchange Membrane" electrolysis.

Anyway, the invention beneficially allows to optimize, particularly reduce dimensioning of, harmonic filter design and minimizing related costs of filter-compensation units.

Furthermore, the proposed solution advantageously enables mitigation of severe imbalances on the DC side which may result from a stack exchange, maintenance or service measure performed during the lifetime of either of the stacks. Aging of the stacks depends heavily on (ohmic) heat losses and is directly proportional to the current squared and the electrical resistance of the stack. Therefore, a higher current flow through the stack should result in a faster stack aging due to heat-induced electrolyzer cells degradation, and hence, increased unbalance on the DC side after a certain time.

Overall, the electrolysis plant or system runs at an improved efficiency, when the same or a similar cell or stack voltage level is applied to the stacks.

Actually, the firing angle of each of the rectifier units or rows of rectifier controls serves as a correcting variable for the voltage control, wherein irrespective of individual current-voltage-characteristics between electrolyser stacks connected to different rectifier units, non-characteristic harmonics emitted by said rectifier units are fully, almost fully or largely compensated. The technical advantage is inherent to the voltage control and the correlated variable of the firing angle. As described above, evidently, the emerge of harmonic distortions is then inherently prevented.

In an embodiment the DC voltage control forms a first control mode, which is only applied in case that a difference in the operating voltages between electrolyser stacks, module rows or stack series connected to different rectifier units falls below a predefined threshold. In other words, said difference preferably needs to be small enough to prevent a significant reduction in hydrogen production for any of the stack rows. That is to say, limitation of the method to an application below the indicated threshold makes the method most effective, while said threshold, correction or second control mode might be required in order to maintain a favorable hydrogen yield and an as much as possible balanced system operation.

To this effect said threshold is mainly determined by a consideration of the particular design and operation functionality of the electrolyzer system, the total number of stacks and the number of stacks per row/stacks per rectifier unit, a particular harmonics filtering design and/or a desirable gas production rate being regularly proportional to the DC current that flows into a stack series.

The method further comprises a second control mode according to which the controls of the method is extended by a DC current control loop, in which the rectifier's DC current is controlled in addition. In other words, the first mode is preferably not really replaced but enhanced by a DC current control in addition to the DC voltage controls.

According to an embodiment the second control mode comprises an integrated DC current control loop, wherein the DC voltage is controlled to a provided DC voltage reference value, thereby providing a reference DC current control value as an output which is compared to a measured or actual value. This embodiment advantageously allows to counteract the 'margin' in the operating point of different electrolyzer stacks rows by the current control functionality. The inclusion of the DC current control does particularly not overly affect the merit of reducing AC current harmonics in the power supply since at least in the first control mode, the harmonics are reliably reduced to a certain extent, such as an extent being small or acceptable compared to the standard control approach of using the DC current control only. Filters would probably still be needed with the DC voltage control, but related equipment size and costs would be significantly reduced.

The DC voltage control can cancel out the harmonics resulting from the imbalances on the DC-side, but if the transformer manufacturing process has not been optimal, e.g. when there are significant voltage or phase shift differences, the DC voltage control might not manage cancelling the resulting harmonics on its own without any filtering features.

For instance, the method or method controls expediently switches from the first control mode to the second control mode only when the difference in the DC operating voltages exceeds the predefined threshold.

Preferably, the (higher-level) DC voltage control loop of the method includes a further system or plant level control, being set up to monitor a hydrogen production in the electrolyser stacks, wherein in case that a hydrogen production rate shows an unacceptable margin or variation, the DC reference voltage signal is adjusted to counteract a reduction in the hydrogen production. This control functionality may e.g. be embodied in a program of the related electrolyzer controller and advantageously allows to level and adept the hydrogen production rate again to the benefit of an effective hydrogen production and little aging of the electrolyzer cells. In other words, the first and/or second control modes as described may be embedded or made dependent on her "droop control" of the related hydrogen electrolyzer plant.

In an alternative embodiment, the DC current control loop comprises or is confined by a dynamic saturation limit of a reference DC current value, which prevents the DC current from falling below a level being unacceptable for a hydrogen production rate. This embodiment is particularly advantageous as an alternative to the described droop control functionality.

An implementation of the DC voltage controller and/or the DC current controller is preferably a PI (proportional-integral) controller. In the alternative, other types, like PID controllers could be used.

According to an embodiment, the method comprises yet another or additional control logic for switching between the first control mode and the second control mode, wherein the additional control logic (constantly) monitors and calculates the existing DC voltage offset between electrolyser stacks connected to different rectifier units, such as those stacks with the highest and the lowest DC voltage levels. In case a difference in the DC operating voltages exceeds the predefined threshold, the control logic will send a command to the rectifier to change the controls from the first mode to the second mode, and vice versa. That is to say, said additional control logic may switch from the first to the second mode as described. In addition, the logic and controls may as well be used to switch back from the second to the first mode, thereby attaining again the first mode for the operation of the power supply.

The invention may further be embodied in or relate to a computer-program or computer program product comprising instructions which, when the program is executed by a controller, particularly an electrolyzer controller and/or a converter controller, cause the controller to carry out the steps of said method. The controller may comprise the relevant means to execute said method.

The invention may also pertain to a computer-readable storage medium, a related computer program (stored on the storage medium) and/or computer program product.

The computer-readable storage medium may be a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer-readable storage medium may be a RAM or a ROM, wherein particularly a flash memory is used. The computer readable-storage medium may also be a data communication network which allows downloading a program code, such as the Internet for example, or further systems.

A further aspect of the present invention relates to a control unit or controller, particularly an electrolyzer controller and/or a rectifier or converter controller, comprising said computer-readable storage medium. The controller expediently comprises the contemplated (various) control loops and is suitable to provide a control functionality according to the described method.

The controller may be a programmable logic controller (PLC). The controller may comprise at least one processor and said computer-readable storage medium, wherein the computer-readable storage medium comprises said computer program which, and when executed by the at least one processor, cause the controller to perform the method as described above.

The at least one processor may also be a microprocessor and/or a microcontroller and/or a FPGA (Field Programmable Gate Array) and/or a DSP (Digital Signal Processor).

Another aspect of the present invention relates to a power supply system for the electrolyzer system, the system comprising the control unit and the transformer unit operable to transform an alternating current electrical power.

The power supply further comprises the rectifier system being operable to convert the alternating current electrical power (AC) to a direct current electrical power (DC), wherein at least two thyristor-type rectifier units are connected in parallel between the transformer unit on the AC side and an electrolysis array on the DC side. Further, the two rectifier units are connected to different electrolyser stacks.

A still further aspect of the present invention relates to the (multi-stack) electrolyzer system plant for green hydrogen production, the electrolyser system comprising the power supply system as described.

Advantages and embodiments relating to the described method and/or the described computer program are valid or pertain likewise to the control unit, the power supply system and/or the electrolyzer plant as described.

Further, features and advantageous embodiments become apparent from the following description of the exemplary embodiment in connection with the Figures.
Figure 1 indicates a multi-stack electrolyzer plant particularly comprising a power supply system implementing inventive control features.
Figure 2 indicates the simplified control scheme with a conventional DC current control functionality according to the prior art.
Figure 3 shows a simple diagram with a voltage current characteristic indicated for each of two different electrolyzer stack rows with a different DC link voltage.
Figure 4 indicates - by way of the simplified control scheme - an inventive control path in a first control mode.
Figure 5 schematically indicates an embodiment of an inventive control path according to a second control mode.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

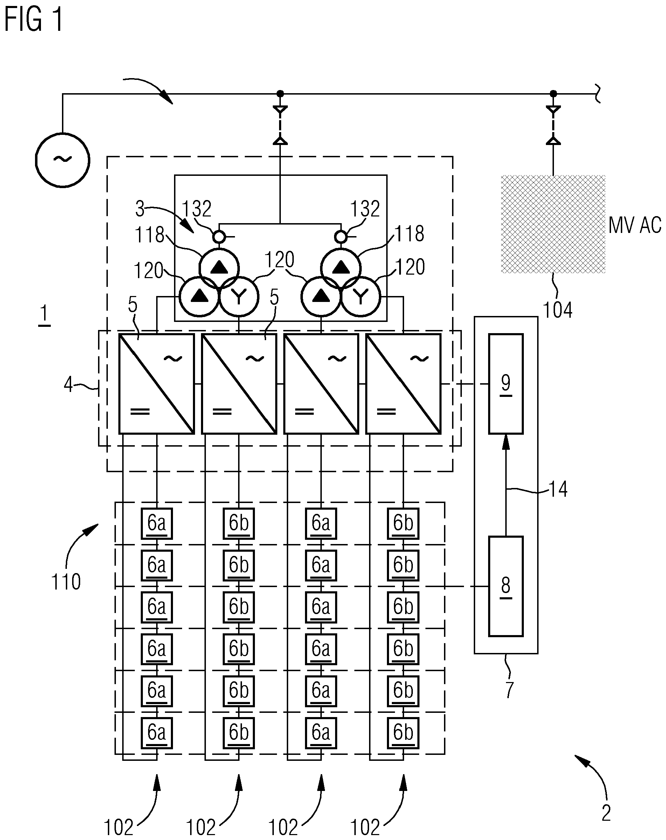

Figure 1 shows multi-stack electrolyzer system 2, particularly for green hydrogen production on a multi-MW scale.

The electrolyzer plant or system 2 is suitable to produce hydrogen and oxygen from water through a process of PEM electrolysis, or alternatively alkaline electrolysis. The provided approach can basically even be applied to any electrolysis system forming a so-called 'multipulse' system with thyristor-based rectifiers.

The electrolyzer system 2 comprises a plurality of electrolyzer stacks 6a and 6b. Preferably each of stacks indicated with 6a form of first array, row or series of stacks, while the stacks indicated with 6b form a second array, being connected in parallel to the first array. Each of the arrays is expediently connected to a power supply line 102 via a power supply system 1 (see below).

The system 2 might as well be divided into a plurality of paralleled stack groups (indicated with reference sign 110).

The electrolyser system 2 comprising the power supply system 1. The power supply system 1 comprises a transformer unit 3 operable to transform an alternating current electrical power. The transformer unit 3 is expediently suitable to transfer the AC electrical power from a voltage input provided to a desired voltage output. The transformer unit 3 may further comprise to three-winding transformers, each having a primary winding 118 in the secondary winding 120. One secondary winding is preferably set up in a delta and the other secondary winding present in star arrangement.

As indicated, the supply system 1 may as well comprise a switching element 132 for each row of rectifier units.

Consequently, the power supply one further comprises a rectifier system 4 operable to convert the alternating current (AC) electrical power, preferably at the medium voltage (MV) level, to a direct current (DC) electrical power DC, preferably at the low voltage (LV) level.

The rectifier system 4 comprises according to the exemplified embodiment of Figure 1 at least two thyristor-type rectifier units 5 which are connected in parallel between the transformer unit 3 on the AC side and an electrolysis array 110 on the DC side.

Notably, the two rectifier units 5 are connected to different electrolyser stacks 6a, 6b.

The power supply 1 includes a power supply connection that is connected to an electrical power source 104, like a transmission grid or island grid of a power system in an island operation mode or in a (public or private) network operation mode.

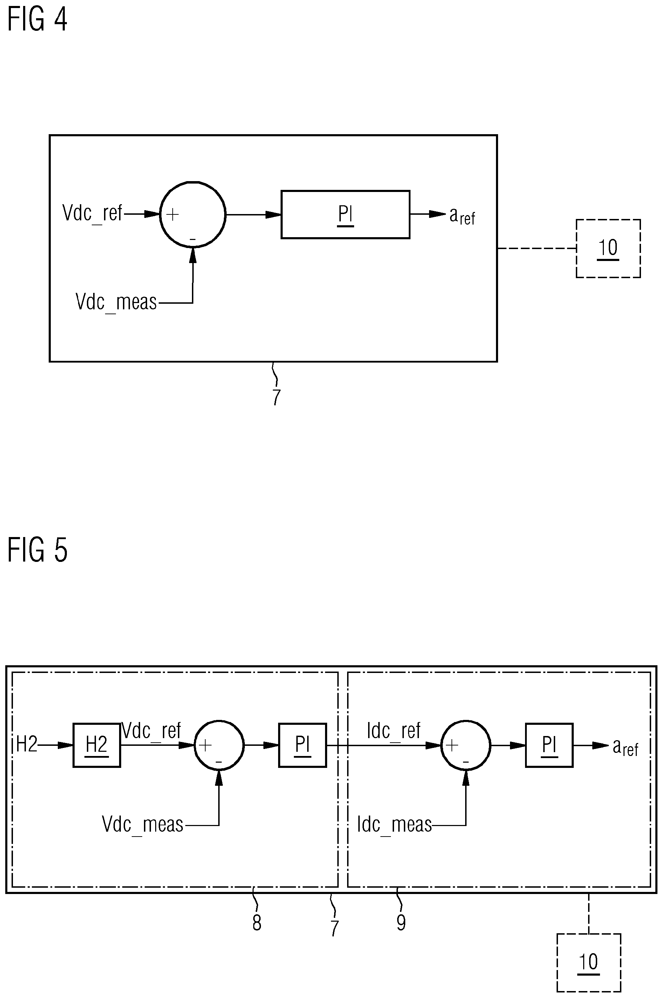

As a further part of the power supply 1, a control unit 7 is shown, wherein the control unit may be an inventive control unit or may be programmed according to the inventive method, as will be further described by way of the following figures. To this effect the control unit 7 is suitable to provide a control functionality according to the method as will particularly be described by way of figures 4 and 5.

The control 7 may for instance be a micro-processor-based device e.g. including a memory device, data storage device, and an output device for collecting, analyzing, storing and outputting data.

The control unit 7 may include or be interlinked to an electrolyzer controller or control unit 8 and a related rectifier controller 9.

The electrolyzer controller 8 and the rectifier controller 9 may be connected by a data connection which is indicated by reference numeral 14.

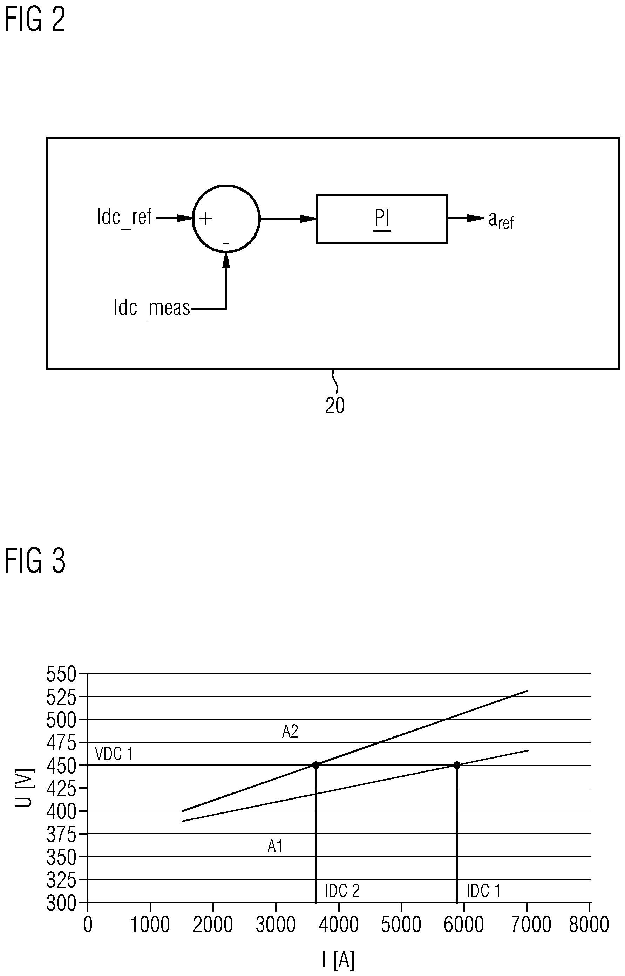

Figure 2 indicates a simple control scheme 20, particularly implementing a DC current control loop, as might be applied in a conventional rectifier control loop. Therein, a DC reference current I_{dc ref} is used as a reference value to which a measured value I_{dc meas} is controlled. The controls may be carried out with a PI controller, wherein a reference firing angle α_{ref} of the related thyristor rectifier is provided as a value according to which both rectifiers of a multi-pulse system might be required to operate.

Figure 3 indicates a situation of two different voltage - current (or current-voltage) characteristics of different electrolyzer stack rows. As is shown by the deviating course of straight lines, resistance (impedance) and I-V behavior of both of the module rows is different. Such a difference might occur due to the different aging or degradation stati of the single electrolysis cells (of either of the stacks). Such a stack may actually be composed of dozens of single electrolysis cells stacked one above the other by the way. It is particularly shown in Figure 3 that the first array slope A1 (lower line) may have a flatter development as compared to a second array A2 (upper line). When applying a DC link voltage of e.g. U_{DC}1 different currents, namely I_{DC}2 for A2 and I_{DC}1 for A1 arise.

In other words, only slight variations in the DC link voltage often mean significant variations in the current operating point. Thus, as illustrated in Figure 2, when the DC current is controlled by each of the rectifier units 5, a significantly different aging history might lead to notable differences in the operating voltage, or vice versa. Theoretically, considering a large electrolysis plant comprising more than 20 stacks arranged in e.g. 4 rows (not explicitly indicated in figure 1) a DC voltage difference of more than 100 volt could be the consequence by just taking into account the beginning-of-life and end-of-life difference in the voltage.

It is also known that a higher DC current leads to higher production rate. Simultaneously, however, a higher DC current causes more severe aging.

This difficulty is also solved by the means of the present invention which will be further described by way of Figures 4 and particularly Figure 5 below.

The inventive method is a method of operating the power supply system 1 for the electrolyzer system 2. The power supply 1 comprises the transformer unit 3 and the rectifier system 4 operable to convert the alternating current electrical power AC to a direct current electrical power DC, wherein at least two thyristor-type rectifier units 5 are connected in parallel between the transformer unit 3 on the AC side and an electrolysis array 110 on the DC side as described herein.

The method hence comprises controlling the voltage of the rectifier units 5, wherein a reference DC voltage is provided to a control unit 7, wherein the control unit 7 controls the DC voltage V_{dc} to a common reference value V_{dc ref} by providing a corresponding firing angle α_{ref}. To this effect the firing angle α_{ref} of each of the rectifier units 5 serves as a correcting variable for the voltage control, wherein - as an advantage over conventional approaches - non-characteristic harmonics emitted by said rectifier units 5 are compensated irrespective of individual current-voltage-characteristics between the stacks 6a, 6b.

Analogous to Figure 2, the inventive control scheme of Figure 4 shows that, instead of a current, a DC voltage control loop is provided, wherein a DC reference voltage V_{dc ref} is controlled against a measured reference DC voltage V_{dc meas}.

The controls may be carried out with a PI controller, wherein the reference firing angle α_{ref} of the related thyristor rectifier is provided as a value according to which both rectifiers of a multi-pulse system shall operate.

Said the DC voltage control forms a first control mode, which is preferably only applied in case that a difference in the operating voltages between electrolyser stacks connected to different rectifier units falls below a predefined threshold.

As is described by way of the scheme of Figure 5, the method further comprises a second control mode according to which the controls of the method is extended by a DC current control loop, in which the rectifier's DC current I_{dc ref} is controlled in addition (cf. also description of Figure 3 above).

The second control mode comprises an integrated DC current control loop, wherein the DC voltage is controlled to a provided DC voltage reference value, thereby providing a reference DC current control value as an output which is particularly compared to a measured I_{dc meas} value. That is to say for the second mode, while the DC voltage controls may be comprised by the electrolyzer controller 8, the remaining DC current controls may be implemented or programmed in the rectifier controller 9. An output of the PI controller from the DC voltage controls is preferably directly fed to the DC current control loop. The DC current control loop, as illustrated in Figure 5 likewise provides the firing angle α_{ref} as a correcting variable, similar to the situation illustrated in Figure 4.

Furthermore, the method switches from the first control mode to the second control mode preferably only when the difference in the DC operating voltages exceeds the predefined threshold. In turn, the threshold is determined by a consideration of at least one of the following parameters: design and operation functionality of the electrolyzer system, number of stacks per row, a harmonics filtering design and/or a desirable gas production rate.

Given the many variations in the overall plant system, it is in line with the understanding of a person skilled in the art undue to quantify the threshold in particular. Yet, conditionally, a difference exceeding the threshold might be indicated by the percentage of more than 3% which might be deemed as still in the normal range according to which the whole system works efficiently. When exceeding said 3% e.g. to a percentage of 5% or more, then, under certain conditions, the control of the first mode might be switched to the second notice, and vice versa.

To this effect the DC voltage control loop of the method includes preferably a system level control, being set up to monitor a hydrogen production in the electrolyser stacks 6a, 6b, and wherein in case that a hydrogen production rate shows an unacceptable margin, the DC reference voltage signal V_{dc ref} is adjusted to counteract a reduction in the hydrogen production. As an alternative to this "droop control", the DC current control loop may comprise a dynamic saturation limit of a reference DC current value, which prevents the DC current I_{dc} from falling below a level being unacceptable for a hydrogen production rate.

The above-mentioned control unit 7 might additionally comprise another control logic 10 (not explicitly indicated in the figures) for switching between the first control mode and the second control mode, wherein the additional control logic 10 constantly monitors and calculates the existing DC voltage offset between the electrolyser stacks rows with the highest and the lowest DC voltage levels. In case a difference in the DC operating voltages exceeds the predefined threshold, the control logic will send a command to the rectifier to change the controls e.g. from the first mode to the second mode.

Actually, in line with the first control mode and the second control mode, a philosophy of the invention is a hybrid approach, wherein in mode 1, the harmonics compensation or harmonics reduction function is achieved, whereas for large "margins", it is shifted towards the additional controls of the method's second mode. In other words, with inclusion of both control modes, one can bring about the inventive advantages of effective harmonics cancellation at a sufficiently high hydrogen production rate.

According to an alternative explanation, the present invention might be summarized following:
Compared to the common approach of controlling the DC current of the rectifiers described in Figure 2, this invention proposes to control the output DC-voltage of rectifiers instead of the output DC-current. Generally, if two rectifiers are connected to the same AC voltage level and have identical reference DC link voltages, they should operate with the same firing angle, according to the simplified equation: U_{DC}=1.35·U_{AC}·cos(AO).

However, as described above, real system regularly show differences between the V-I curve characteristics of two different module rows. If a DC-current control logic is implemented, this would mean that different DC voltages would be required to reach that operating point. Considering that the AC voltage is assumed to be the same, the only other variable that can influence the required DC voltage to reach the reference DC current operational point, is the firing angle which must be different.

This will lead to the rectifiers emitting different levels of harmonics on the AC side, and therefore would not be able to fully compensate the harmonics between them.

To address this issue, this invention disclosure proposes according to Figures 4 and 5 that - instead of utilizing the DC-current control approach - basically a DC-voltage control approach is applied. This would mean that irrespective of differences on the V-I curve characteristics between any two module rows, the DC voltage would be identical, provided that the AC voltage input is identical.

This would lead to the firing angles being the same as well, which in return would mean that the rectifiers operating in parallel will emit the same current harmonics on the AC side and will be able to almost completely cancel non-characteristic harmonics of 24-pulse or any other multi-pulse system configuration.

The only influencing factor that would remain in determining the number of harmonics would be deviations originating from transformer manufacturing tolerances.

Furthermore, it must be considered that the hydrogen production in an electrolysis system is proportional to the DC current that flows into the electrolysis modules. Therefore, it has to be ensured that the hydrogen production remains high within certain boundaries.

Considering this, the proposed idea can be implemented in the described two different modes or method variations.

According to variation 1, a direct DC voltage control is implemented. Here a reference DC voltage would be provided to the controller and the controller (e.g. a PI controller) would control the DC voltage to its reference value by providing a corresponding firing angle. This method is described in the Figure 4. This method shall only or mostly be applicable for cases where the voltage requirements between electrolysis stack series connected to different rectifier units is not big enough to lead to a significant reduction in hydrogen production for a stack series. Therefore, in addition to the DC voltage control, it is recommended that in case the voltage deviation between different stack series becomes high enough, the proposed DC voltage control is switched to the second mode, as is indicated in Figure 5.

According to this second variant, the existing DC current control loops can partly remain as in conventional approaches. However, here an additional outer-level control loop is maintained, which will consist of controlling the DC voltage as per Figure 4 to a provided DC voltage reference value, thereby providing as an output a reference DC current control value for the current control loop.

Additionally, the upper-level control of DC voltage control loop can include a plant level control monitoring the hydrogen production in each of the electrolysis stack series.

In case the hydrogen production is affected by a huge margin e.g. considered as unacceptable for a given setup, the reference DC voltage signal can be adjusted to counteract the reduction in hydrogen production. This can result for instance in the DC voltage reference value being dependent on a droop control relating the hydrogen production to the DC voltage reference value.

Alternatively, the DC current control loop can be modified to include a dynamic saturation limit of the reference DC current value, which would prevent the current from dropping to levels seen as unacceptable for the hydrogen production rate.

A switching between control mode one and mode two is proposed to be done by additional control logic, which constantly monitors and calculates the existing DC voltage offset between electrolysis stack series with the highest and the lowest DC voltage levels.

In case DC voltage offset exceeds a certain limit - this limit is specified depending on the design and operation philosophy of the electrolyzer - this additional control logic will send the command to the rectifier to change the controls modes from method 1 to method 2.

Anyway, it will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. A method of operating a power supply system (1) for a multi-stack electrolyzer system (2), the power supply (1) comprising:
- a transformer unit (3) operable to transform an alternating current electrical power and
- a rectifier system (4) operable to convert the alternating current electrical power to a direct current electrical power, wherein at least two thyristor-type rectifier units (5) are connected in parallel between the transformer unit (3) on the AC side and an electrolysis array (110) on the DC side of the rectifier (4), and wherein the two rectifier units (5) are connected to different electrolyser stacks (6a, 6b),
- the method comprising controlling the voltage of the rectifier units (5), wherein a reference DC voltage is provided to a control unit (7), wherein the control unit (7) controls the DC voltage (V_{dc}) to a common reference value (V_{dc ref}) by providing a corresponding firing angle (α_{ref}).

2. The method according to one of claims 1, wherein the firing angle (α_{ref}) of each of the rectifier units (5) serves as a correcting variable for the voltage control, and wherein, irrespective of individual current-voltage characteristics between electrolyser stacks (6a, 6b) connected to different rectifier units (5), non-characteristic harmonics emitted by said rectifier units (5) are compensated.

3. The method according to claim 1 or 2, wherein the electrolyzer system (2) is set up for generating hydrogen (H₂) by an electrolysis of water.

4. The method according to one of the previous claims, wherein the DC voltage control forms a first control mode, which is only applied in case that a difference in the operating voltages between electrolyser stacks connected to different rectifier units falls below a predefined threshold.

5. The method according to claim 4, wherein the method further comprises a second control mode according to which the controls of the method is extended by a DC current (I_{dc ref}) control loop, in which the rectifier's DC current is controlled in addition.

6. The method according to claim 5, wherein the second control mode comprises an integrated DC current control loop, wherein the DC voltage is controlled to a provided DC voltage reference value, thereby providing a reference DC current control value as an output which is compared to a measured (I_{dc meas}) value .

7. The method according to one of claims 4 to 6, wherein the method switches from the first control mode to the second control mode only when the difference in the DC operating voltages exceeds the predefined threshold.

8. The method according to claim 7, wherein the threshold is determined by a consideration of at least one of the following parameters: design and operation functionality of the electrolyzer system, number of stacks per row, a harmonics filtering design and/or a desirable gas production rate.

9. The method according to one of claims 3 to 8, wherein the DC voltage control loop of the method includes a system level control, being set up to monitor a hydrogen production in the electrolyser stacks (6a, 6b), and wherein in case that a hydrogen production rate shows an unacceptable margin, the DC reference voltage signal (V_{dc ref}) is adjusted to counteract a reduction in the hydrogen production.

10. The method according to one of the previous claims, wherein the DC current control loop comprises a dynamic saturation limit of a reference DC current value, which prevents the DC current (I_{dc}) from falling below a level being unacceptable for a hydrogen production rate.

11. The method according to one of claims 4 to 10, comprising an additional control logic (10) for switching between the first control mode and the second control mode, wherein the additional control logic (10) monitors and calculates the existing DC voltage offset between electrolyser stacks (6a, 6b) connected to different rectifier units (5) with the highest and the lowest DC voltage levels, and wherein in case a difference in the DC operating voltages exceeds the predefined threshold, the control logic will send a command to the rectifier to change the controls from the first mode to the second mode.

12. A computer-program product comprising instructions which, when the program is executed by a control unit (7), particularly an electrolyzer controller (8) and/or a rectifier controller (9), cause the controller to carry out the method steps according to one of the previous claims.

13. A control unit (7) for a power supply system for a multi-stack electrolyzer system (2), the control unit (7) being suitable to provide a control functionality according to the method of one of the previous claims.

14. A power supply system (1) for a multi-stack electrolyzer system (2), the system comprising:
- the control unit (7) according to claim 13,
- a transformer unit (3) operable to transform an alternating current electrical power, and
- a rectifier system (4) operable to convert the alternating current electrical power (AC) to a direct current electrical power (DC), wherein at least two thyristor-type rectifier units (5) are connected in parallel between the transformer unit (3) on the AC side and an electrolysis array (110) on the DC side, wherein the two rectifier units (5) are connected to different electrolyser stacks (6a, 6b).

15. A multi-stack electrolyzer system (2) for green hydrogen production, the electrolyser system (2) comprising the power supply system (1) according to claim 14.
